**Europäisches Patentamt**

**European Patent Office**

**Office européen des brevets**

(19)

(11) Veröffentlichungsnummer: **0 341 326**
**A1**

(12) # EUROPÄISCHE PATENTANMELDUNG

(21) Anmeldenummer: **88107417.3**

(22) Anmeldetag: **09.05.88**

(51) Int. Cl.⁴: **H04N 5/18**

(43) Veröffentlichungstag der Anmeldung:
**15.11.89 Patentblatt 89/46**

(84) Benannte Vertragsstaaten:
**AT BE CH DE ES FR GB IT LI NL SE**

(71) Anmelder: **ANT Nachrichtentechnik GmbH**
**Gerberstrasse 33**
**D-7150 Backnang(DE)**

(72) Erfinder: **Drinda, Klaus, Dipl.-Ing.**
**Tannenweg 12**
**D-7150 Backnang(DE)**

(54) **Verfahren zur Wiederherstellung des Gleichspannungswertes bei Videosignalen sowie Anordnung.**

(57) Zur Wiederherstellung des Gleichspannungswertes bei Videosignalen wurde bisher eine Signalabtastung und eine Aufintegration vorgenommen. Während der Video-Klemmperiode wurde der Referenzwert gehalten.

Zur Wiederherstellung des Gleichspannungswertes von Videosignalen wird nun ein Transkonduktanzverstärker (TCA) verwendet, dessen Spannung zur Arbeitspunkteinstellung (Bias) im Takt von Video-Klemmimpulsen (KL) umgeschaltet wird. Das Ausgangssignal des Transkonduktanzverstärkers (TCA) wird einem Haltekondensator (HC) zugeführt, aufintegriert (IG) und als Gegenkopplungssignal für den Transkonduktanzverstärker (TCA) verwendet.

Die Trägerverwischung von Videosignalen läßt sich um mehr als 55 dB, und niederfrequente Störsignale lassen sich um mehr als 40 dB unterdrücken.

**EP 0 341 326 A1**

## Verfahren zur Wiederherstellung des Gleichspannungswertes bei Videosignalen sowie Anordnung

Die Erfindung betrifft ein Verfahren gemäß dem Oberbegriff des Patentanspruchs 1 sowie eine Anordnung zum Durchführen dieses Verfahrens.

Bei Videosignalen, insbesondere bei über Satelliten übertragenen TV-Signalen, müssen Maßnahmen zur Klemmung und zur Wiederherstellung des Gleichspannungswertes vorgesehen werden (DE PS 36 05 048; Bosch Technische Berichte 7 (1985) 6, Seiten 276-282). Zur Wiedergewinnung dieses Gleichspannungswertes kann eine Signalabtastung in Verbindung mit einer Aufintegration vorgenommen werden.

Aufgabe der Erfindung ist es, ein Verfahren zur Wiederherstellung des Gleichspannungswertes anzugeben, bei welchem der Einfluß von Störsignalen möglichst unwirksam bleibt. Außerdem soll eine Anordnung zum Durchführen eines solchen Verfahrens angegeben werden. Diese Aufgabe wird bezüglich des Verfahrens durch die Merkmale des Patentanspruchs 1 und bezüglich der Anordnung durch die Merkmale des Patentanspruchs 3 gelöst. Der Anspruch 2 zeigt eine Weiterbildung des Verfahrens auf und die Patentansprüche 4 und 5 zeigen Weiterbildungen der Anordnung auf.

Die Erfindung geht von folgender Erkenntnis aus: Bei trägerenergieverwischten Videosignalen, entsprechend den Vorschriften der WARC-BS 77 (Rundfunktechnische Mitteilungen, Jahrgang 29 (1985) Heft 5, Seite 238) ergibt sich bei der Widergewinnung des Gleichspannungswertes (mittlerer Graupegel) mittels Abtasthalteschaltungen nur ein Störabstand von etwa 40 dB, wohingegen bei der erfindungsgemäßen Wiedergewinnung des Gleichspannungswertes eine Störunterdrückung der Trägerenergieverwischung von mehr als 55 dB erreichbar ist. Außerdem werden niederfrequente Störspannungen, wie z.B. Sinusschwingungen und deren Harmonische, um mehr als 40 dB unterdrückt. Während bei der Wiedergewinnung des Gleichspannungswertes mit Abtasthalteschaltungen der während einer Klemmperiode erreichte exakte Referenzwert ermittelt und gehalten wird, erfolgt beim Verfahren nach der Erfindung auch noch eine Nachregelung während der Klemmperiode. Die Einhüllende der Trägerenergieverwischung wird beim Verfahren nach der Erfindung nachgebildet und dem Transkonduktanzverstärker gegenphasig zugeführt. Somit kann die Trägerenergieverwischung geklemmt und vollständig kompensiert werden. Eine Regelung der hinteren Schwarzschulter des Videosignals auf ein dem Transkonduktanzverstärker angebotenes Gleichspannungsreferenzsignal ist auf einfache Weise möglich.

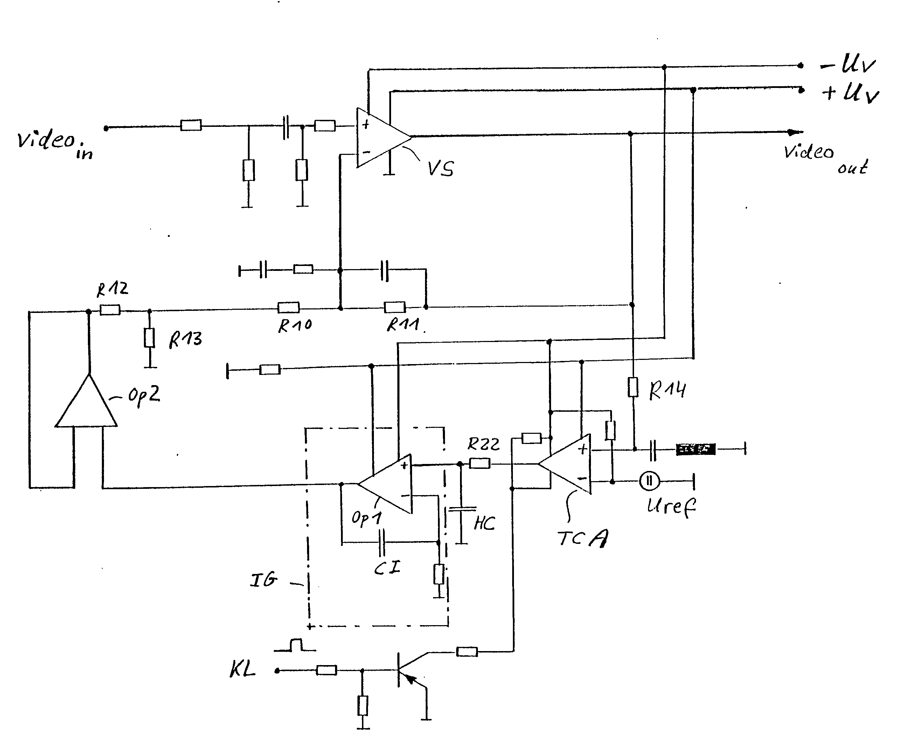

Anhand der Figur, die ein Prinzipschaltbild einer Anordnung zum Durchführen des Verfahrens nach der Erfindung zeigt, wird ein Ausführungsbeispiel der Erfindung näher erläutert.

Das Videosignal, dessen Gleichspannungswert (mittlerer Graupegel) wieder hergestellt werden soll, wird einem Videoverstärker VS am nichtinvertierenden Eingang zugeführt. Diesem Videoverstärker VS wird am invertierenden Eingang ein Regelsignal zur Verstärkungsregelung zugeführt, das aus dem Gegenkopplungssignal für einen Transkonduktanzverstärker TCA abgeleitet wird und mittels dessen der Gleichspannungsmittelwert des Videosignals wiederhergestellt wird. Das Ausgangssignal des Videoverstärkers VS wird dem Transkonduktanzverstärker TCA über den Widerstand R14 am nichtinvertierenden Eingang zugeführt. Der invertierende Eingang dieses Transkonduktanzverstärkers TCA ist mit einem Gleichspannungsreferenzsignal Uref, z.B. einer Gleichspannung von 400 mV, beaufschlagt. Der Transkonduktanzverstärker TCA besteht hier aus einem Operationsverstärker, der eine bipolare Konstantenstromquelle am Ausgang besitzt. Ein solcher Transkonduktanzverstärker liefert einen Konstantstrom am Ausgang, der von der Eingangsspannung, hier der Spannungsdifferenz zwischen Videosignal und Referenzsignal, abhängig ist. Als Transkonduktanzverstärker kann ein handelsüblicher integrierter Baustein, z.B. CA 3080 von RCA, eingesetzt werden. Die Spannung zur Arbeitspunkteinstellung (Bias) des Transkonduktanzverstärkers TCA wird erfindungsgemäß im Takt von Video-Klemmimpulsen KL zwischen Masse und negativer Versorgungsspannung $-U_V$ umgeschaltet. Dadurch wird der Transkonduktanzverstärker TCA für die Zeit, in der keine Klemmimpulse KL auftreten, gesperrt. Der Transkonduktanzverstärker TCA arbeitet somit als Multiplizierer mit hochohmigem Ausgang für das Video-Signal und die Klemmimpulse KL. Zwischen den Ausgang des Transkonduktanzverstärkers TCA und Masse ist ein Haltekondensator HC geschaltet, der durch das Ausgangssignal des Transkonduktanzverstärkers TCA geladen bzw. entladen wird. Ein Widerstand R22 zwischen dem Ausgang des Transkonduktanzverstärkers TCA und dem Haltekondensator HC ist so dimensioniert, daß er zusammen mit dem Haltekondensator HC eine Signalverzögerung bei verrauschten Videosignalen bewirkt. Dem Haltekondensator HC ist ein Integrator IG mit einer Integrationszeitkonstante von beispielsweise 250 $\mu$s, bestehend aus einem Operationsverstärker Op1 und einem Integrationskondensator CI in seinem Gegenkopplungszweig, nachgeschaltet. Das mittels Integrator IG integrierte Signal wird als Gegenkopplungssignal für den Transkonduktanzverstärker TCA verwendet. In der Signalrückführungsschleife für das Gegenkopplungssignal liegt ein Spannungsteiler, bestehend aus den Widerständen R10 und R11. Vom gemeinsamen Verbindungspunkt der Widerstände R10 und R11 führt eine Verbindungsleitung zum Verstärkungssteuereingang - invertierender Eingang - des dem Transkonduktanzverstärker TCA vorgeschalteten Videoverstärker VS.

Durch diese Maßnahmen ergibt sich für den Videoverstärker VS folgender Regelbetrieb: Wenn der Transkonduktanzverstärker TCA gesperrt ist, d.h. keine Klemmimpulse KL vorhanden sind, ist die Verstärkung des Videoverstärkers VS bestimmt durch die Widerstände R10, R11; die Widerstände R12, R13 und den Ausgangswiderstand des Operationsverstärkers Op2, der sich wie die Widerstände R12 und R13 ebenfalls im Gegenkopplungszweig des Transkonduktanzverstärkers TCA befindet. Beim Auftreten von Klemmimpulsen KL wird der Videoverstärker VS über die integrierte Spannung am Haltekondensator HC so nachgeregelt, daß der Momentanwert seiner Ausgangsspannung dem Gleichspannungsreferenzsignal Uref entspricht.

**Ansprüche**

1. Verfahren zur Wiederherstellung des Gleichspannungswertes bei Videosignalen, gekennzeichnet durch        .

- Zuführen des Videosignals an den Eingang eines Transkonduktanzverstärkers (TCA), welcher das Videosignal mit einem Referenzsignal vergleicht,
- Umschalten der Spannung zur Arbeitspunkteinstellung (Bias) des Transkonduktanzverstärkers (TCA) im Takt von Video-Klemmimpulsen (KL),
- Laden/Entladen eines Haltekondensators (HC) durch das Ausgangssignal des Transkonduktanzverstärkers (TCA),
- Integrieren des Signals am Haltekondensator (HC),
- Verwenden des integrierten Signals als Gegenkopplungssignal für den Transkonduktanzverstärker (TCA).

2. Verfahren nach Anspruch 1, gekennzeichnet durch
- Verwenden des Gegenkopplungssignals als Regelsignal für einen dem Transkonduktanzverstärker (TCA) vorgeschalteten Videoverstärker (VS).

3. Anordnung zum Durchführen des Verfahrens nach einem der Ansprüche 1 oder 2, gekennzeichnet durch
- einen Transkonduktanzverstärker (TCA), dessen erster Eingang mit einem Videosignal, dessen zweiter Eingang mit einem Gleichspannungsreferenzsignal und dessen Arbeitspunkteinstellungseingang mit einem Klemmimpuls beaufschlagbar ist,
- einen Haltekondensator (HC) am Ausgang des Transkonduktanzverstärkers (TCA),

- einen sich an den Haltekondensator (HC) anschließenden Integrator (IG),
- einer Signalrückführungsschleife vom Ausgang des Integrators (IG) zum ersten Eingang des Transkonduktanzverstärkers (TCA).

4. Anordnung nach Anspruch 3, gekennzeichnet durch
- einen Spannungsteiler (R10, R11) in der Signalrückführungsschleife,
- eine Verbindungsleitung vom Spannungsteiler (R10, R11) zum Verstärkungssteuereingang eines dem Transkonduktanzverstärker (TCA) vorgeschalteten Videoverstärkers (VS).

5. Anordnung nach Anspruch 3 oder 4, gekennzeichnet durch einen Widerstand (R22) zwischen dem Ausgang des Transkonduktanzverstärkers (TCA) und dem Haltekondensator (HC), der so dimensioniert ist, daß er zusammen mit dem Haltekondensator (HC) eine Signalverzögerung bei verrauschten Videosignalen bewirkt.

video_in

−U_v
+U_v

Video_out

VS

R12
R13
R10
R11
R14

Op2

Op1
CI
HC
IG

R22

TCA

U_ref

KL

EP 0 341 326 A1

BK 87/84

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | FR-A-2 554 661 (RCA)<br>* Seite 8, Zeile 19 - Seite 9, Zeile 20; Figur 1 *<br>--- | 1,3,4 | H 04 N 5/18 |
| A | EP-A-0 087 180 (PHILIPS)<br>* Seite 5, Zeile 31 - Seite 8, Zeile 14 *<br>--- | 1,3 | |
| A | DE-B-2 507 231 (BOSCH)<br>----- | | |

RECHERCHIERTE SACHGEBIETE (Int. Cl.4)

H 04 N

Der vorliegende Recherchenbericht wurde für alle Patentansprüche erstellt

| Recherchenort | Abschlußdatum der Recherche | Prüfer |
|---|---|---|
| DEN HAAG | 10-01-1989 | YVONNET J.W. |